# EUROPEAN PATENT SPECIFICATION

(11) **EP 3 969 828 B1**
(45) Date of publication and mention of the grant of the patent: **21.01.2026**
(21) Application number: 20843002.5
(22) Date of filing: 08.07.2020
(51) Int. Cl.: F28D 20/00, F28D 20/02

(54) **HIGH TEMPERATURE HEAT STORAGE SYSTEM IN ENERGY POWER PLANTS**
HOCHTEMPERATUR-WÄRMESPEICHERSYSTEM IN KRAFTWERKEN
SYSTÈME DE STOCKAGE DE CHALEUR À HAUTE TEMPÉRATURE DANS DES CENTRALES ÉLECTRIQUES

(30) Priority: 23.07.2019 TR 201911021
(43) Date of publication of application: 23.03.2022
(73) Proprietor: Yasar Universitesi, 35100 Bornova/Izmir (TR)
(72) Inventor: UMDU, Emin Selahattin, Kuzeykent Kastamonu (TR); BILIR, Levent, Bornova/ Izmir (TR)
(74) Representative: Yalçiner Patent and Consulting Ltd.
(86) International application number: PCT/TR2020/050603
(87) International publication number: WO 2021/015698

(56) References cited:
- EP-A1- 1 577 548
- EP-A1- 2 369 288
- EP-A1- 3 376 121
- WO-A1-2013/070572
- US-A- 4 085 333
- US-A1- 2013 049 368
- US-A1- 2014 053 554
- US-A1- 2015 267 566
- US-A1- 2016 032 903

## Description

### Technical Field of the Invention

The invention ensures that power plants continue to operate at high efficiency during periods when there is no demand or high fluctuations, by keeping power production at nominal operations and storing as heat by increasing the temperature of a molten metal / alloy and to be stored as sensible heat (and / or latent heat). The stored heat will later be used when demand is high. The invention describes a storage system and method of operation of this system that supports the inlet temperature drops that may occur in the heat source (for example due to geothermal fluid or boiler feeding) by the use of stored energy.

### Known State of the Invention Technique (State of Art)

The power generation capacity in power plants cannot be utilized to the grid in periods where demand is reduced, and this results in economic losses and increased environmental impact. For example, energy demand decreases significantly during night-time. Because of the tariff schemes and variable pricing, geothermal and other thermal power plants become uneconomical for up to six hours during low grid demand. In addition, due to the decrease in heat supplying fluid temperatures coming from either furnaces or geothermal wells in all operating periods of power generation, nominal power generation decreases, and efficiency losses are observed.

Similarly, in power plants that use any other energy sources such as wind, solar, fossil fuel, nuclear, et., there is a decrease in capacity utilization and thus efficiency losses in periods of low demand. In this case, the power generation can be kept at a nominal value and when the demand is low and generated power can be stored as sensible or latent heat, which can be used later directly or indirectly for power generation to supply peak loads on the grid. Thus, providing both economic, operational, and environmental benefits.

There are three types of methods in thermal energy storage: sensible thermal energy storage, latent thermal energy storage and thermo-chemical energy storage.

Sensible thermal energy storage (STES) is the simplest and most technologically advanced method among thermal energy storage methods. Basically, it is based on increasing the temperature of a material to be reused with the given heat and the amount of heat stored is directly proportional to the mass and specific heat of the material.

If, as a result of the given heat, the temperature of the material reaches the phase change (solid-liquid or liquid-vapor) temperature and the heat transfer to the material is continued, this time the material changes its phase so that the temperature of the material remains constant. During the phase change, it stores a large amount of heat in its body. This method is called latent thermal energy storage (LTES). Further both sensible, and latent heat storage can also occur together in a storage medium.

Thermo-chemical energy storage (TCES) is based on the use of two or more chemical compounds that can react exothermically during reversible reactions and energy storage in this cycle. This energy offers greater potential for stable and efficient energy production with high energy storage densities, long-term storage without heat loss. Advantages and disadvantages of heat storage methods are given in the table below

| | **Advantages** | **Disadvantages** |
|---|---|---|
| **STES** | •the simplest and the most technologically advanced | •Low thermal energy storage density is achieved |
| **LTES** | •Moderate energy intensity among the three methods | •There is low thermal conduction for the materials used |
| | •Energy storage and reuse process takes place at constant temperature | |
| | | •In long-term use, material structure deterioration may occur |
| | | •There is a loss of heat |
| **TCES** | •Long-term storage is possible | •The system is complex |
| | •The volume required for storage is comparatively small | •Requires high initial investment |
| | •There is no heat loss | |

A thermal heat storage system basically includes a storage tank, a heat injection system, and a heat recovery system. The storage tank holds material (phase change material or metal or alloy) for thermal storage. The heat injection system is connected to an inlet on the storage tank. The heat recovery system is connected to an outlet on the storage tank and uses steam under depressed conditions for heat transfer.

Existing heat storage techniques are designed with low temperature and / or constant temperature operating conditions in mind. Commonly used heat storage material in sensible heat storage are rocks or stones. However, this storage method is used in building heating / cooling applications where low temperatures and relatively low storage needs are available. It is not feasible due to the dimensions required when considering the high amount of heat and relatively high temperatures required in energy productions using steam or similar fluids.

Molten salts can be used as fluid at higher temperatures. For this reason, they can be used by up to about 260 °C. In this way, both sensible and latent heat can be used. However, they can be only used up to between 350 - 550 °C based on salt used. This results in low capacity by volume and investing capital.

EP 2 369 288 A1 discloses a system according to the preamble of claim 1.

### Brief Description and Objectives of the Invention

The invention is defined in the claims.

Use of metals in heat storage makes operational capacity easily reach high temperatures, over 1000 °C or more, which makes it more applicable for heat storage applications compared to low and medium temperature technologies. The invention is a heat storage system which uses both sensible and specific heat using metals for energy storage and reuse in power generation. The density of metals is higher than the density of both salts and natural stones, their specific heat capacities are at similar levels, and metals can easily reach high temperatures and be re-used indefinitely leads to high capacity heat storage become more efficient and low impact to the environment without sacrificing economic benefits. Such a system is about 5 times smaller than the natural stones and salts, and therefore the required equipment sizes. Thus, this not only reduces investment costs, but also enables homogeneous heat distribution within the system, which leads to better operational efficiency.

It is a feature of the invention that the heat in metals can also be used after the metal returns to the solid phase. While molten salts can only be used efficiently in the liquid phase, even when the melted metal turns into solid phase in the melting furnaces, it can transfer its heat to the system without any problem. The invention uses both latent heat released during phase change, and sensible heat released until the temperature drops to fluid temperature.

Another important point related to the invention is that the energy required for heat storage to rise metals and / or alloys to high temperature by using non-demand electricity (and heat if available) produced in the plants instead of conventional heat sources. In this way, it is possible to easily reach the high temperatures which is not possible with other methods, and this can increase the overall capacity of the system several times over alternative methods.

Due to the above-mentioned reasons, the system according to the invention can provide heat storage at a density close to thermo-chemical heat storage with a system as simple as sensible and latent heat storage methods. In addition, unlike only latent heat storage methods, there is no decrease in performance due to deterioration of the material structure in long-term use. Further to provide high density heat storage, the system can also provide high heat flux. Therefore, the temperature differences to be experienced within the system are minimized within a small system volume.

Capacity comparisons of heat storage materials to increase the fluid temperature by 1.6 °C for 1 hour for a 20 MW geothermal power plant are given in the table below.

**Table 1: Comparison of the use of different heat storage materials in a geothermal power plant**

| | Natural Stones | Salts | Metals |
|---|---|---|---|
| Operational temperatures (°C) | > 200 | 350 - 550 | 800 - 1200 |
| Specific Heat (kJ/kg K) | 0,80 - 0,90 | 1,5 - 1,8 | 0,5 - 1,0 |
| Density (g/cm³) | 1,9 - 2,6 | 1,85 | 2,7 - 7,2 |
| Required mass (ton) | 2000 - 2500 | 200 - 800 | 100 - 300 |
| Volume (m³) | 800 - 1200 | 107 - 415 | 36 - 44 |

### Figures

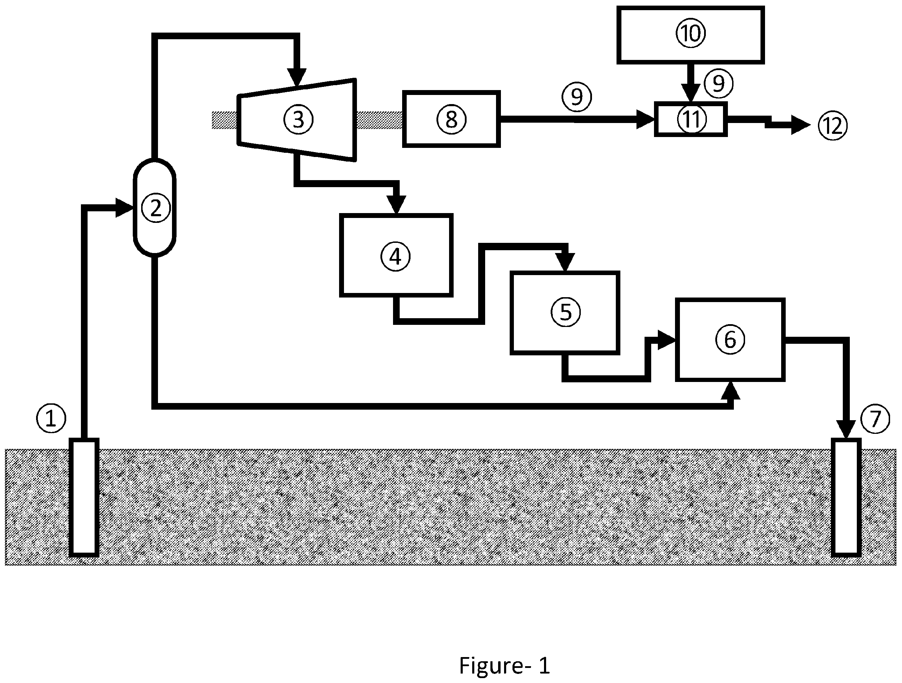

Figure 1: An example geothermal power plant
Figure 2: Use of the thermal storage system in power generation plants.
Figure 3: Use scenario of heat storage system in geothermal power plants.

### Elements

1. Production well
2. Separator
3. Steam Turbine
4. Condenser
5. Cooling well
6. Tank
7. Re-injection well
8. Generator
9. Electricity (and / or) Heat
10. Renewable energy sources
11. Transformer
12. Network
13. Hot fluid
14. Heat transfer fluid
15. Heat storage tank
16. Heat exchanger
17. Steam
18. Non-demand electricity generation
19. Cold fluid
20. Second Heat exchanger

### Detailed Description of the Invention

In the state of art, storage of heat produced by concentrated solar energy is used as the heat source. However, in the invention, unused electricity (9) and / or heat energy is stored as sensible heat and / or latent heat by molten metal / alloy or other phase change material (organic, inorganic, eutectic salt, etc.). In order to maintain oven to stay at high temperatures for a long time, heat insulation was made with layers of ceramic materials, aerogels and similar materials based on their thermal and mechanical properties. The heat stored in molten metal / alloy or phase change material is transferred to the heat transfer fluid (14) by means of a heat exchanger (16) placed around or inside the tank (6). Second heat exchanger (20) is used to transfer heat by using heat transfer fluid and the stored heat to the second fluid which used for power generation in the plant or directly to the plant heat source. The heat storage system can be connected to other heat uses in the facility, energy storage systems or systems containing waste heat.

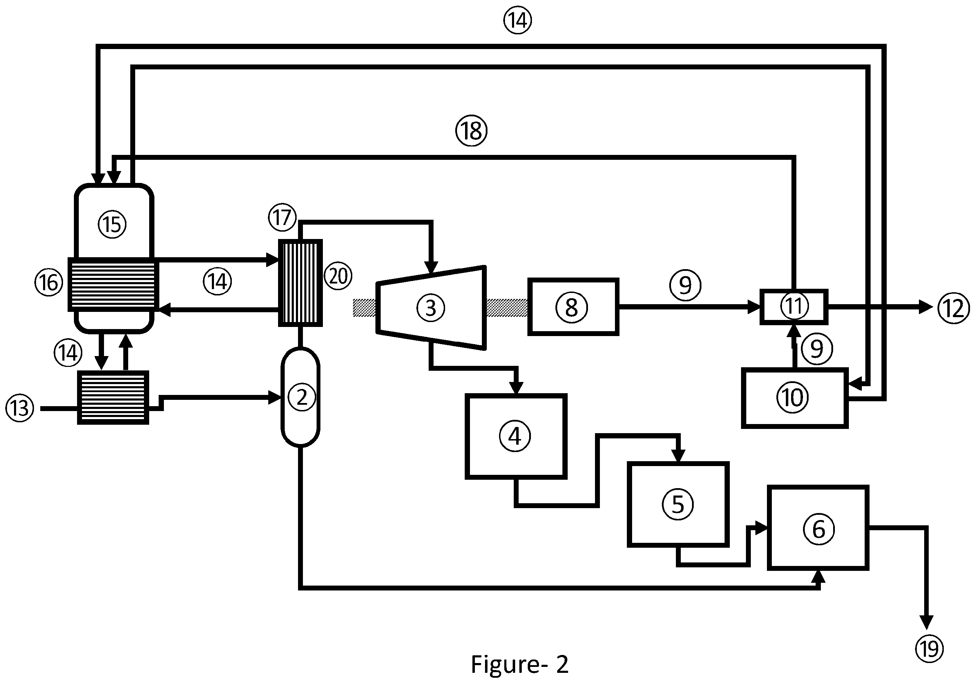

The steps for the sample application shown in Figure 2 are presented below.
1) In the facility, electricity and / or heat energy transferred to the heat storage tank, which is not demanded by the grid (12) or used for internal consumption and / or waste heat utilization systems (15).
2) Metal melting furnaces such as direct or indirect electric arc furnaces, induction furnaces or other electric furnaces can be used as the heat storage tank (15). Apart from this, tanks (6) containing any phase change material can also be used as heat storage tanks (15). When an electric arc furnace is used, an arc occurs with high current density between the electrodes and the metal / alloy in the chamber, and high temperature is obtained, thereby storing heat in metal or alloy whose temperature increases and / or passes into the liquid phase. Heat storage can be realized as sensible thermal energy storage and / or latent thermal energy storage. In sensible heat storage use, metal or alloy can be kept in solid phase or liquid phase. Apart from metal melting furnaces as heat tanks, solids or liquids heated by electrical resistances as heat tanks can be used as phase change material. The heat storage tank (15) has thermal insulation to be selected depending on the operating temperature. These thermal insulating materials can be ceramics, polymers prepared as fibre, mesh, foam and sheet, or insulating materials where they are used with each other or with other materials.
3) The heat storage material held at high temperature in the heat storage tank (15) is transferred to the lower temperature heat transfer fluid (14) with the help of a heat exchanger (16) (heat exchanger). Heat exchangers (16) are devices used to perform heat transfer between two fluids at different temperatures. In the system, pipe heat exchangers (16), plate heat exchangers (16), expanded surface heat exchangers (16), regenerative heat exchangers (16) can be used as heat exchangers (16). In these systems, the heat exchanger 16 whose flow is selected can be single or more than one pass. These flows can be used as parallel, counter, crosswise or combinations thereof. In heat exchange, fluids can be in one phase, liquid, or gas, as well as in double phase or boiling. Synthetic or natural heat transfer oils or molten salts can be used when the liquid phase heat transfer fluid (14) is used. The heat exchangers (16) can be two, three or multi-fluid.
4) The temperatures of the fluids, such as naturally high-temperature geothermal sources, whose temperature is raised in the boilers by another heat source, or the temperature of the steam turbine (3) is increased directly in the separator inlet or in the absence of a separator, depending on the amount of non-condensing gases. Another application is to transfer heat from the non-condensing gases at the separator outlet, such as CO₂ or H₂S, to the separated water vapor (17) with the help of the second heat exchanger (20).
5) To increase the temperature of the liquid and / or vapor (17) at the high temperature separated from the separator with the help of the heat transfer fluid (14) with the heat taken from the heat storage tank (15) through the heat exchanger (16), and to the second heat exchanger (20). Flow control can be controlled depending on temperature, flow, or heat flux. Valves used for flow control can be sliding, thermostatic, electromagnetic, automatic aerator. By-pass, safety valves or other protection equipment can be used in flow lines. The pumps used for flow can be wet or dry rotor.
6) The heated heat transfer fluid (14) is used to increase the temperature of the liquid and / or vapor (17) separated from non-condensing gases coming from the separator using the second heat exchanger (20) or heat exchanger (20) group. This heat exchanger (20) may also have the characteristics specified in item (3).
7) The heat exchanger with the features specified in Article 3 can be used together with the heat exchanger (20) specified in Article 6 or alone. In this heat exchanger (20), the temperature is increased from and transferred to the steam turbine (3) from lower temperatures such as 130 °C to higher temperatures such as 370 °C, but not limited to these temperature ranges. With the increase of temperature and pressure, turbine energy production is increased in a variable amount according to the turbine type and properties.
8) Separator (2); It is a system that provides separation of solid particles and / or liquid and vapor phases from the heat charged fluid in the power generation facilities by the flash steam method. The fluid, which then separates the solid particles and non-condensing fluid, is transferred to the heat exchanger and then to the steam turbine (3).
9) Single-step or multi-step action turbines or reaction turbines can be used as the steam turbine (3). Also, the turbines can be axial, where the movement of the fluid occurs parallel to the turbine shaft, or complex flow and diameter turbines, the flow direction of the steam (17) perpendicular to the shaft axis.
10) Steam (17) coming from the fluid in the system rotates the turbine blades, and the generator (8) on the same line as the shaft converts mechanical energy into electrical (9) energy.
11) Condenser (4), condenser or condenser are heat exchangers (16) and (20) in steam power systems, by transferring heat to the environment or another cooler. In this way, the steam (17) leaves the turbine at lower pressure and lower temperature, thereby transforming a larger proportion of the thermal energy of the steam into power. In addition, the condensed liquid can be condensed in order to be reused or removed from the facility.
12) Fluids whose temperature cannot be lowered sufficiently are reduced to lower temperatures in cooling wells (5) or pools.
13) When the fluid is to be used again, necessary conditions are carried out by storing it in a tank (6).
14) Re-use of refrigerant in facilities such as thermal or nuclear power plants; in geothermal power plants, they are transferred to re-injection wells (7) to be reprinted underground.
15) Electricity (9) and / or heat generated from renewable energy sources (10) such as wind, hydro, solar are transferred for use in the heat storage system. In the case of heat transfer, the heat transfer fluid (14), the systems used to transfer and the heat exchangers (16) and (20) have the features specified in items 3 and 5. In the case of electricity (9) production from renewable energy sources (10), electricity can be added to the power plant production with a central transformer (11) or can be transmitted directly for use in the heat storage tank (15).
16) Transformer (10) mentioned in the system are electrical machines that do not have any moving parts that raise or lower their voltage without changing the frequency of electrical energy. Regardless of the types and connection conditions of the power plant, its purpose is to transfer the produced electrical energy to the internal consumption, heat storage system and the network (12) upon request.

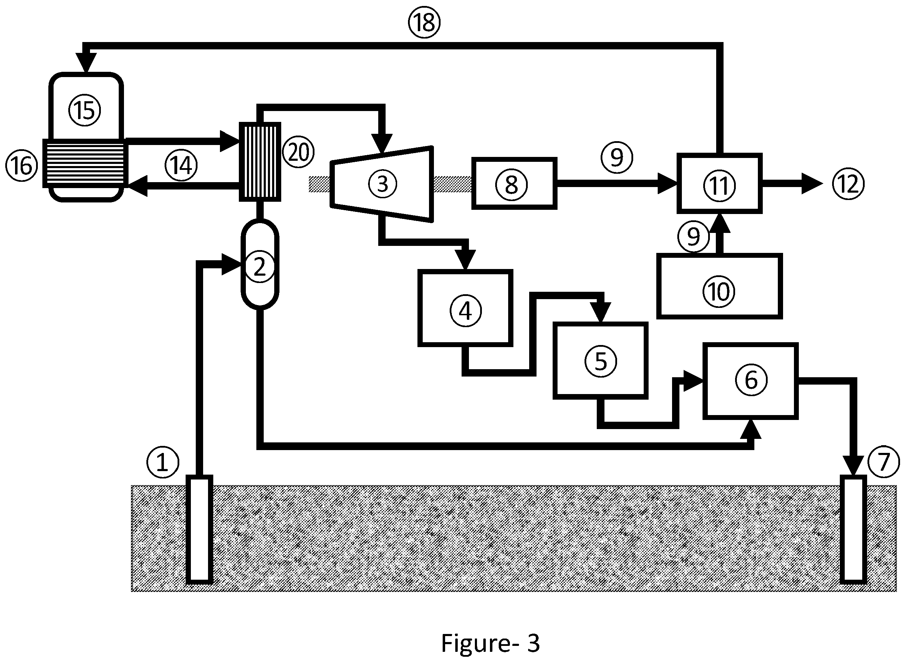

Sample application steps in Figure 3 are given below.
1) The electrical energy that is not demanded from the mains (12) in the facility or not evaluated in internal consumption is transferred to the heat storage tank (15).
2) Metal melting furnaces such as direct or indirect electric arc, induction or other electric furnaces can be used as the heat storage tank (15). When an electric arc furnace is used, an arc occurs with high current density between the electrodes and the metal in the chamber, and high temperature is obtained, thereby storing heat in metal or alloy whose temperature increases and / or passes into the liquid phase. Heat storage can be realized as sensible thermal energy storage and / or latent thermal energy storage. In sensible heat storage use, the metal can be kept in solid phase or liquid phase. Apart from metal melting furnaces as a heat tank, solids or liquids heated by means of electrical resistances can be used as heat tanks. The heat storage tank (15) has thermal insulation to be selected depending on the operating temperature. These thermal insulating materials can be ceramics, polymers or other materials that are prepared as aerogels, fibre, mesh, foam and sheet, or insulating materials where they are used with each other or with other materials.
3) The heat storage material held at high temperature in the heat storage tank (15) is transferred to the lower temperature heat transfer fluid by means of a heat exchanger (16). Heat exchangers (16) are devices used to perform heat transfer between two fluids at different temperatures. Tubular heat exchangers, plate heat exchangers, expanded surface heat exchangers (16), regenerative heat exchangers (16) can be used as heat exchangers (16) in the system. The heat exchanger 16 selected in these systems may be single or more than one pass. These flows can be used as parallel, inverted, crosswise or combinations thereof. In heat exchange, fluids can be in one phase, liquid, or gas, as well as in double phase or boiling. Synthetic or natural heat transfer oils or molten salts can be used when the liquid phase heat transfer fluid (14) is used. The heat exchangers (16) can be two, three and multi-fluid.
4) The heat transfer fluid (14) whose temperature has increased with the heat taken from the heat storage tank (15) is transferred to the other heat exchanger (20) in order to increase the temperature of the high temperature water and / or steam (17) separated from the separator with the help of pumps. Flow control can be controlled depending on temperature, flow, or temperature. Valves used for flow control can be sliding, thermostatic, electromagnetic, automatic aerator. By-pass, safety valves or other protection equipment can be used in flow lines. The pumps used for flow can be wet or dry rotor.
5) The heated heat transfer fluid (14) is used to increase the temperature of water and / or steam (17) separated from non-condensing gases coming from the separator using other heat exchanger (20) or heat exchanger group. This heat exchanger (16) may also have the characteristics specified in item 3. In this heat exchanger (20), the temperature is increased from 130 ° C to 370 ° C and transferred to the steam turbine (3). With the increase of temperature and pressure, turbine energy production is increased in a variable amount according to the turbine type and properties. Single-step or multi-step action turbines or reaction turbines can be used as the steam turbine (3). Also, the turbines can be axial, where the movement of the fluid occurs parallel to the turbine shaft, or complex flow and diameter turbines, the flow direction of the steam (17) perpendicular to the shaft axis.
6) Heat storage system can be connected to other heat uses, energy storage systems or systems containing waste heat in the facility.

The system, for example, increases the temperature of the fluid fed from the wells to geothermal power plants, especially during the daytime, when the atmospheric temperature increases and decreases the efficiency of the facility. The required heat energy is used to increase the capacity and efficiency of the facility during the periods when the production demand increases by storing the electricity (9) energy produced during the periods when the production capacity of the facility cannot be used.

Similarly, electricity (9) and / or heat generation at times when demand is low in any renewable resource (10) (wind, solar, biomass, etc.) or in any power plant with conventional (fossil) fuel or nuclear fuel. The idea of not decreasing, storing more electricity (9) and / or heat energy than demand, and the use of this stored energy in energy production as well as normal energy production will be the application.

## Claims

1. High temperature heat storage system in power plants that includes;
• a heat storage tank (15) where electrical energy and / or heat energy (9) is stored in a power generation facility that is not demanded from a network (12) or used for internal consumption,
• A heat transfer fluid (14) for transferring stored heat to fluid used for power generation in the power plant or directly to a power plant heat source,
• At least one heat exchangers (16) for transferring a thermal storage material kept at high temperature in the heat storage tank (15) to at least one heat transfer fluid (14) at lower temperature,
• A separator (2) for separation of solid particles and / or liquid and vapor phases from the heat charged fluid in a power generation facilities by a flash steam method, **characterized by** the following further features:
• A pump for transferring of the heat transfer fluid (14), whose temperature has increased with the heat taken from the heat storage tank (15), to a second heat exchanger (20), where it increases the temperature of the high-temperature water and/or steam (17) separated from the separator, • The second heat exchanger (20) serially connected the heat exchanger (16) in order to increase the temperature of the high temperature liquid and / or steam (17) separated from the separator (2) with the help of the pump.

2. High temperature heat storage system in power plants according to claim 1; it is **characterized in that**; said heat exchanger (16) has three fluids wherein said fluids are sythretic, natural heat transfer oil and molten salt.

3. High temperature heat storage system in power plants according to claim 1, **characterized in that** it includes valve for flow control.

4. High temperature heat storage system in power plants according to claim 3, wherein said valve is sliding.

5. High temperature heat storage system in power plants according to claim 3, wherein said valve is thermostatic.

6. High temperature heat storage system in power plants according to claim 3, wherein said valve is electromagnetic.

7. High temperature heat storage system in power plants according to claim 3, wherein said valve is automatic aerator

8. Heat storage method according to claim 1, **characterized in that** heat storage tank (15) is metal melting furnace.

9. Heat storage method according to claim 8, **characterized in that** the metal melting furnace is direct or indirect electric arc furnace.

10. Heat storage method according to claim 1, and it is **characterized in that**; said heat exchanger (16) is tubular heat exchanger, plate heat exchanger, regenerative heat exchanger or expanded surface heat exchanger.

11. High temperature heat storage method by using a system as in claim 1 in power plants **characterized in that** it comprises the process steps of;
• An electricity generation (18) other than the mains demand in a facility or transfer of electrical energy and / or heat (9) energy not evaluated in domestic consumption to at least one heat storage tank (15),
• Transferring a thermal storage material kept at high temperature in the heat storage tank (15) to at least one heat transfer fluid (14) at a lower temperature with the help of at least one heat exchanger (16),
• Transferring the heat taken from the heat exchanger (16) connected to the heat storage tank (15) with the heat transfer fluid (14) to a second heat exchanger (20) that is serially connected to the heat exchanger (16) in order to increase the temperature of a high temperature liquid and / or steam (17) separated from a separator (2) with the help of a pump,
• Re-use of refrigerant in facilities such as thermal or nuclear power plants; in geothermal power plants, it is transferred to re-injection wells (7) for resending underground.

## Patentansprüche

1. Hochtemperatur-Wärmespeichersystem in Kraftwerken, das Folgendes umfasst:
• Einen Wärmespeichertank (15), in dem elektrische Energie und/oder Wärmeenergie (9) in einer Stromerzeugungsanlage gespeichert wird, die nicht von einem Netz (12) angefordert oder für den internen Verbrauch verwendet wird,
• Ein Wärmeübertragungsfluid (14) zum Übertragen der gespeicherten Wärme auf ein Fluid, das zur Stromerzeugung im Kraftwerk verwendet wird, oder direkt auf eine Wärmequelle des Kraftwerks,
• Mindestens einen Wärmetauscher (16) zum Übertragen eines Wärmespeichermaterials, das im Wärmespeichertank (15) auf hoher Temperatur gehalten wird, auf mindestens ein Wärmeübertragungsfluid (14) mit niedrigerer Temperatur,
• Ein Separator (2) zum Abscheiden von Feststoffpartikeln und/oder Flüssigkeits- und Dampfphasen aus der wärmegeladenen Flüssigkeit in einer Stromerzeugungsanlage durch ein Flash-Dampf-Verfahren, **gekennzeichnet durch** die folgenden weiteren Merkmale:
• Eine Pumpe zur Übertragung des Wärmeübertragungsfluids (14), dessen Temperatur durch die aus dem Wärmespeichertank (15) entnommene Wärme erhöht wurde, zu einem zweiten Wärmetauscher (20), wo es die Temperatur des vom Separator abgetrennten Hochtemperaturwassers und/oder -dampfes (17) erhöht,
• Der zweite Wärmetauscher (20) ist in Reihe mit dem Wärmetauscher (16) geschaltet, um die Temperatur der vom Separator (2) abgetrennten Hochtemperaturflüssigkeit und/oder des Dampfes (17) mit Hilfe der Pumpe zu erhöhen.

2. Hochtemperatur-Wärmespeichersystem in Kraftwerken gemäß Anspruch 1, **dadurch gekennzeichnet, dass** der Wärmetauscher (16) drei Fluide enthält, wobei es sich bei den Fluiden um synthetisches Wärmeträgeröl, natürliches Wärmeträgeröl und geschmolzenes Salz handelt.

3. Hochtemperatur-Wärmespeichersystem in Kraftwerken gemäß Anspruch 1, **dadurch gekennzeichnet, dass** es ein Ventil zur Durchflussregelung umfasst.

4. Hochtemperatur-Wärmespeichersystem in Kraftwerken gemäß Anspruch 3, wobei das Ventil ein Schieber ist.

5. Hochtemperatur-Wärmespeichersystem in Kraftwerken gemäß Anspruch 3, wobei das Ventil thermostatisch ist.

6. Hochtemperatur-Wärmespeichersystem in Kraftwerken gemäß Anspruch 3, wobei das Ventil elektromagnetisch ist.

7. Hochtemperatur-Wärmespeichersystem in Kraftwerken gemäß Anspruch 3, wobei das Ventil ein automatischer Belüfter ist.

8. Wärmespeichermethode gemäß Anspruch 1, **dadurch gekennzeichnet, dass** der Wärmespeichertank (15) ein Metallschmelzofen ist.

9. Wärmespeichermethode gemäß Anspruch 8, **dadurch gekennzeichnet, dass** es sich bei dem Metallschmelzofen um einen direkten oder indirekten Lichtbogenofen handelt.

10. Wärmespeichervorrichtung nach Anspruch 1, **dadurch gekennzeichnet, dass** der Wärmetauscher (16) ein Rohrwärmetauscher, ein Plattenwärmetauscher, ein regenerativer Wärmetauscher oder ein Wärmetauscher mit erweiterter Oberfläche ist.

11. Verfahren zur Wärmespeicherung bei hohen Temperaturen unter Verwendung eines Systems gemäß Anspruch 1 in Kraftwerken, **dadurch gekennzeichnet, dass** es die folgenden Verfahrensschritte umfasst:
• Eine Stromerzeugung (18) mit Ausnahme des Netzbedarfs in einer Anlage oder die Übertragung von elektrischer Energie und/oder Wärme (9), die nicht im häuslichen Verbrauch berücksichtigt wird, an mindestens einen Wärmespeichertank (15),
• Übertragung eines im Wärmespeichertank (15) auf hoher Temperatur gehaltenen Wärmespeichermaterials auf mindestens ein Wärmeübertragungsfluid (14) mit niedrigerer Temperatur mit Hilfe mindestens eines Wärmetauschers (16),
• Übertragung der vom Wärmetauscher (16) entzogenen Wärme, der mit dem Wärmespeichertank (15) mit der Wärmeübertragungsfluid (14) verbunden ist, an einen zweiten Wärmetauscher (20), der in Reihe mit dem Wärmetauscher (16) geschaltet ist, um die Temperatur der aus dem Separator (2) abgeschiedenen Hochtemperaturflüssigkeit und/oder des Dampfes (17) mithilfe einer Pumpe zu erhöhen,
• Wiederverwendung des Kältemittels in Anlagen wie thermischen Kraftwerken oder Kernkraftwerken; in Geothermiekraftwerken wird es in Re-Infiltrationsbrunnen (7) geleitet, um es wieder unterirdisch zu verpressen.

## Revendications

1. Système de stockage de chaleur à haute température dans les centrales qui comprend :
• un réservoir de stockage de chaleur (15) où l'énergie électrique et/ou l'énergie de chaleur (9) est stockée dans une installation de production d'énergie qui n'est pas demandée par un réseau (12) ou utilisée pour la consommation interne,
• un fluide caloporteur (14) pour transférer la chaleur stockée vers le fluide utilisé pour la production d'énergie dans la centrale ou directement vers une source de chaleur de la centrale,
• au moins un échangeur de chaleur (16) pour transférer un matériau de stockage thermique maintenu à haute température dans le réservoir de stockage de chaleur (15) vers au moins un fluide caloporteur (14) à température plus basse,
• un séparateur (2) pour séparer les particules solides et/ou les phases liquide et vapeur du fluide chargé en chaleur dans une installation de production d'énergie par un procédé à vapeur flash, **caractérisé par** les autres caractéristiques suivantes :
• une pompe pour transférer le fluide caloporteur (14), dont la température a augmenté avec la chaleur prélevée du réservoir de stockage de chaleur (15), vers un deuxième échangeur de chaleur (20), où il augmente la température de l'eau et/ou de la vapeur à haute température (17) séparée du séparateur,
• le deuxième échangeur de chaleur (20) est connecté en série à l'échangeur de chaleur (16) afin d'augmenter la température du liquide et/ou de la vapeur à haute température (17) séparés du séparateur (2) à l'aide de la pompe.

2. Système de stockage de chaleur à haute température dans les centrales selon la revendication 1; il est **caractérisé en ce que** ledit échangeur de chaleur (16) a trois fluides, dans lequel lesdits fluides sont un fluide synthétique, une huile caloporteuse naturelle et un sel fondu.

3. Système de stockage de chaleur à haute température dans les centrales selon la revendication 1, **caractérisé en ce qu'**il comprend une soupape pour le contrôle du débit.

4. Système de stockage de chaleur à haute température dans les centrales selon la revendication 3, dans lequel ladite soupape est coulissante.

5. Système de stockage de chaleur à haute température dans les centrales selon la revendication 3, dans lequel ladite soupape est thermostatique.

6. Système de stockage de chaleur à haute température dans les centrales selon la revendication 3, dans lequel ladite soupape est électromagnétique.

7. Système de stockage de chaleur à haute température dans les centrales selon la revendication 3, dans lequel ladite soupape est un aérateur automatique.

8. Procédé de stockage de chaleur selon la revendication 1, **caractérisé en ce que** le réservoir de stockage de chaleur (15) est un four de fusion de métal.

9. Procédé de stockage de chaleur selon la revendication 8, **caractérisé en ce que** le four de fusion de métal est un four à arc électrique direct ou indirect.

10. Procédé de stockage de chaleur selon la revendication 1, et il est **caractérisé en ce que** ; ledit échangeur de chaleur (16) est un échangeur de chaleur tubulaire, un échangeur de chaleur à plaques, un échangeur de chaleur régénératif ou un échangeur de chaleur à surface expansée.

11. Procédé de stockage de chaleur à haute température utilisant un système selon la revendication 1 dans les centrales, **caractérisé en ce qu'**il comprend les étapes du processus suivantes :
• Produire l'électricité (18) autre que la demande du réseau dans une installation ou transférer l'énergie électrique et/ou l'énergie de chaleur (9) non évalué dans la consommation domestique vers au moins un réservoir de stockage de chaleur (15),
• Transférer un matériau de stockage thermique maintenu à haute température dans le réservoir de stockage de chaleur (15) vers au moins un fluide caloporteur (14) à une température plus basse à l'aide d'au moins un échangeur de chaleur (16),
• Transférer la chaleur prélevée de l'échangeur de chaleur (16) connecté au réservoir de stockage de chaleur (15) avec le fluide caloporteur (14) vers un deuxième échangeur de chaleur (20) qui est connecté en série à l'échangeur de chaleur (16) afin d'augmenter la température d'un liquide et/ou de vapeur à haute température (17) séparé d'un séparateur (2) à l'aide d'une pompe,
• Réutiliser le réfrigérant dans des installations telles que les centrales thermiques ou nucléaires ; dans les centrales géothermiques, il est transféré vers des puits de réinjection (7) pour être renvoyé sous terre.
